# EUROPÄISCHE PATENTSCHRIFT

(11) **EP 0 442 267 B1**
(45) Veröffentlichungstag und Bekanntmachung des Hinweises auf die Patenterteilung: **23.04.1997**
(21) Anmeldenummer: 91100429.9
(22) Anmeldetag: 16.01.1991
(51) Int. Cl.: G01N 27/84

(54) **Verfahren und Einrichtung zur Magnetpulverprüfung**
Method and apparatus for testing with magnetic powder
Procédé et appareil pour le contrôle par poudre magnétique

(30) Priorität: 17.01.1990 DE 4001167
(43) Veröffentlichungstag der Anmeldung: 21.08.1991
(73) Patentinhaber: Helling Kommanditgesellschaft für Industrieprodukte und Anlagenbau (GmbH & Co.), D-22525 Hamburg (DE)
(72) Erfinder: Riess, Nathanael, W-2082 Uetersen (DE); Fritsch, Dieter, W-2800 Bremen 33 (DE)
(74) Vertreter: Meyer, Ludgerus A., Dipl.-Ing.

(56) Entgegenhaltungen:
- EP-A- 0 090 190
- EP-A- 0 326 071
- FR-A- 2 471 603
- MESSEN + PRÜFEN, Nr. 11, 30. November 1972, Seiten 701-704; E.A. BECKER : "Die Magnetpulver-Rissprüfung mit zwei gegeneinander phasenverschobenen Wechselfeldern"

## Beschreibung

Die Erfindung betrifft ein Verfahren und eine Einrichtung zur Magnetpulverprüfung an ferromagnetischen Werkstoffen nach dem Oberbegriff der Ansprüche 1 und 4.

Als ein Verfahren der zerstörungsfreien Werkstoffprüfung hat sich seit einigen Jahren bei ferromagnetischen Werkstoffen die Magnetpulverprüfung bewährt. Das Verfahren beruht auf der Magnetisierung eines Werkstücks mit gleichzeitiger Bespülung mit Magnetpulver, wodurch magnetische Diskontinuitäten quer zur Feldrichtung magnetische Streufelder an und über der Oberfläche des Werkstücks verursachen. Die Magnetpulveransammlung über der Diskontinuität macht die Kontur des Fehlers sichtbar und zeigt allgemein die Lokation,Größe, Form und Ausdehnung des Fehlers an.

Das Magnetpulververfahren dient zum Nachweis von vorwiegend spaltartigen Materialtrennungen an der Oberfläche derartiger Werkstücke. Beispielsweise können beim GießprozeB Blasen, nichtmetallische Einschlüsse und Spannungsrisse entstehen. Durch Anwendung des Magnetpulververfahrens können deratige Oberflächenfehler, deren Größenordnung im Bereich von 1 Mikrometer und deren Tiefe in der Größenordnung von unter 10 Mikrometer liegt, festgestellt werden, soweit sie über der Rauhigkeitsgrenze der Oberfläche des Materials liegen. Die weisbarkeit ist ferner von der verwendeten magnetischen Feldstärke und der örtlichen Feldstärkeänderung abhängig.

Zur Anwendung des Magnetpulververfahrens muß das Werkstück auf geeignete Weise magnetisiert werden. Für verschiedene Einsatzzwecke sind auch verschiedene Magnetisierungsmethoden entwickelt worden.

Bei der sogenannten Joch-Magnetisierung gelangt der magnetische Fluß über ferromagnetische Joche in das Werkstück. Die Hauptfeldrichtung ist die Verbindungslinie der beiden Pole des Joches. Wenn die Joche als Einspannvorrichtung ausgebildet sind, wird das gesamte Werkstück magnetisiert. Es können aber auch Handmagnete auf das Werkstück aufgesetzt werden, die den Bereich zwischen den Polen magnetisieren. Um eine ausreichend kräftige Magnetisierung zu erreichen, ist eine gute magnetische Ankopplung an das Werkstück erforderlich. Bei stark strukturierten Werkstücken ist dies in vielen Fällen nicht möglich. Ferner erfordert dieses Verfahren die Anpassung der Magnetpole an das Werkstück, so daß der Einsatz dieses Verfahrens umständlich und begrenzt ist.

Aus der DE-OS 38 02 575 oder der EP 326 071 ist auch ein Verfahren zur Magnetpulverprüfung an ferromagnetischen Werkstoffen bekannt, bei dem das Werkstück berührungslos zwischen zwei Längsschenkel einer gestreckten Spule mit an ihren Schmalseiten abgekröpften Enden eingebracht wird. Durch dieses Verfahren können Rohre auf ihrer Außenseite im Endlosverfahren berührungslos in einem Arbeitsgang auf Längs- und Querfehler untersucht werden.

Aus der FR 2 471 603 ist eine Spulenform bekannt, die Windungen aufweist, die in zwei zueinander senkrecht stehenden Ebenen verlaufen, wobei die Längsleiterabschnitte Überkreuzungsbereiche enthalten.

Die genannten Ausbildungen sind nicht für die Magnetpulverprüfung der inneren Endbereiche von hohlzylindrischen Werkstücken geeignet.

Bei der Prüfung des Inneren von Rohren kann jedoch eine Mittelleiter-Magnetisierung durchgeführt werden, bei der ein Schenkel einer Spule durch das Rohr geführt wird, während der andere Schenkel der Spule außen an dem Rohr entlang geführt wird. Diese Magnetisierung erfordert das Hindurchziehen eines Leiters durch das Rohr, das bei langen Rohren nicht möglich ist.

Im Innenbereich von Rohren ist eine Feststellung möglicher Fehler im allgemeinen lediglich im Endbereich der Rohre erforderlich. Im Bereich der Erdölindustrie schreibt beispielsweise das API (American Petroleum Institute) vor, daß Rohre im Endbereich von 30 - 50 cm vor Aufschneiden eines Gewindes auf Längs- und Querfehler im inneren Endbereich des Rohres geprüft werden.

Die angegebene Innenleitermessung ist für diesen Zweck nicht brauchbar, da diese nur die Möglichkeit der Erkennung von Längsfehlern bietet und außerdem die o.g. Nachteile aufweist.

Zur Ermittlung von Querfehlern ist es bekannt, eine Spulenmagnetisierung zu verwenden, bei der ein lamellierter Blechdorn in das Ende des Rohres eingeführt wird. Bei diesem Magnetisierungsverfahren wird das Rohr selbst als Kurzschlußwicklung verwendet. Zur Herstellung eines derarigen Dorns ist ein hoher Aufwand erforderlich. Das Verfahren eignet sich nur zur Feststellung von Querfehlern.

Zur Feststellung von Längs- und Querfehlern im Endbereich von Rohren ist es nach dem Stand der Technik daher erforderlich, zwei Arbeitsgänge durchzuführen, wobei unterschiedliche Einrichtungen mit getrennten Stromerzeugern vorhanden sein müssen. Dabei ist für die Innenleitermessung ein relativ hoher Strom erforderlich, während für die Induktionsdurchflutung mit Hilfe des Innendorns nur ein relativ niedriger Strom erforderlich ist.

Der Erfindung liegt die Aufgabe zugrunde, ein Verfahren und eine Einrichtung zur Magnetpulverprüfung in ferromagnetischen Werkstoffen anzugeben, die es erlauben, hohlzylindrische Werkstücke, insbesondere Rohre, in einem Arbeitsgang im inneren Endbereich bei hoher Empfindlichkeit sowohl auf Quer- als auch auf Längsfehler zu prüfen. Die Einrichtung soll einfach aufgebaut sein und leicht handhabbar sein.

Diese Aufgabe wird durch das im Anspruch 1 angegebene Verfahren gelöst. Eine Einrichtung zur Durchführung des Verfahrens ist im Anspruch 4 angegeben.

In Unteransprüchen sind bevorzugte Weiterbildungen der Erfindung angegeben.

Die Erfindung erlaubt es, hohlzylindrische Werkstücke, insbesondere Rohre, in ihrem Endberich im Inneren auf Längs- und Querfehler in einem Arbeitgang zu untersuchen. Die Prüfung des Werkstücks erfolgt durch Ein- und Ausfahren der verwendeten Spule in das Werkstück bzw. aus dem Werkstück unter gleichzeitiger Relativdrehung zwischen Spule und Werkstück, um alle Fehlerorientierungen auf allen interessierenden Wandbereichen des Werkstücks zu erfassen.

Die verwendete Spule ist vorzugsweise freitragend aufgebaut und lediglich zur besseren Handhabung in einem Kunststoff eingegossen. Nach Entfernen der Spule aus dem Endbereich des Werkstücks kann das ermittelte Fehlerbild unmittelbar erfaßt werden.

In einer verbesserten Ausführungsform der Erfindung kann der Spule auch ein optisches Erfassungssystem zugeordnet werden, das bereits während des Einfahrens der Spule in das Werkstück Fehlerart, -ort und -größe erfaßt. Durch die Erfindung ist es möglich, in einem Arbeitsgang mit einer einzigen Einrichtung sowohl Quer- als auch Längsfehler zu erfassen. Es ist kein zweiter Stromerzeuger erforderlich, und weitere Arbeitsschritte, wie z.B. Hindurchführen eines Leiters durch das Rohr, sind überflüssig.

Die Erfindung eignet sich auch zur automatisierten Fehlererfassung, wenn vorgesehen ist, daß die verwendete Spule durch eine automatische Einrichtung gesteuert in den Endbereich von Rohren eingeführt wird.

Die Erfindung wird nachstehend anhand eines Ausführungsbeispiels näher erläutert. Es zeigen:
- Fig. 1: eine Schnittansicht durch eine erfindungsgemäße Einrichtung innerhalb eines zu prüfenden Rohres,
- Fig. 2: eine Endansicht der erfindungsgemäßen Einrichtung vom Rohrinneren aus gesehen,
- Fig. 3: eine Vorderansicht der verwendeten Luftspule,
- Fig. 4: eine Seitenansicht auf die Einrichtung, gesehen von der Seite des Luftspalts und
- Fig. 5: eine um 90° gegenüber Fig. 4 gedrehte Ansicht einer verwendeten Spule.

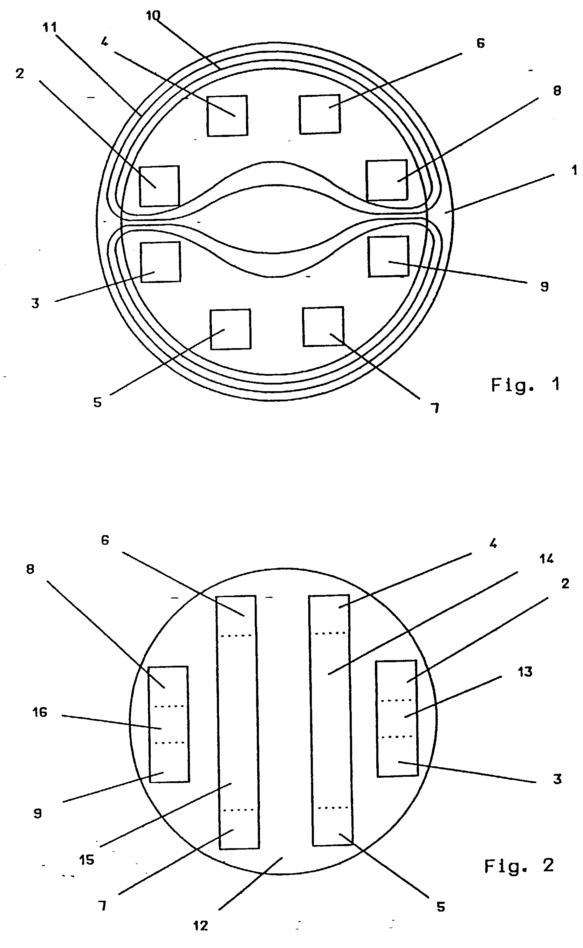

Fig. 1 zeigt eine Einrichtung zur Durchführung des erfindungsgemäßen Verfahrens. Es ist ein Querschnitt durch ein Rohr im Bereich der eingefahrenen erfindungsgemäßen Einrichtung gezeigt. Die im Inneren des Rohres 1 befindliche Luftspule besteht aus einzelnen Längsleitern 2 - 9, die eine Luftspule mit insgesamt vier Windungen ergeben. Die Leitern 2 - 9 erstrecken sich in Axialrichtung des zu prüfenden Rohres. Der Abstand zwischen den Leiterabschnitten 2 und 3 bzw. 8 und 9 ist zur Bildung eines kleinen Luftspaltes klein gehalten. Der Abstand zwischen den Leiterabschnitten 4 und 5 bzw. 6 und 7 ist dagegen größer gewählt, so daß im Außenbereich der Spule diese Leiterabschnitte nahe an die Rohrwand herantreten. Die einzelnen Leiter sind über innenseitige Verbindungen miteinander verbunden, so daß sich eine geschlossene Luftspule ergibt, deren Anschlüsse beispielsweise die Leiterabschnitte 8 und 3, bilden.

Wenn ein hoher Strom von z.B. 1000 - 1500 A in eine derartige Spule eingespeist wird, wird ein Magnetfeld erzeugt, dessen Feldlinien in Quer- zur Längsachse der Leiter verläuft. In Fig. 1 sind beispielsweise Feldlinien 10 und 11 dargestellt, die zwischen den Leiterabschnitten 2 und 3 sowie 8 und 9 stark gebündelt sind und hierbei unmittelbar in die Rohrwand des Rohres 1 eintreten. Im Bereich des seitlichen Austritts aus der Spule und des Eintritts in das Rohr treten also erhebliche Feldstärkegrößen auf, die eine hohe Empfindlichkeit der Meßeinrichtung hervorrufen. Durch die Anpassung des Abstandes der Leiterabschnitte 4 und 5 bzw. 6 und 7 an den Rohrdurchmesser ist vermieden, daß sich außerhalb des Spulenraumes im Luftraum Magnetfelder aufbauen. Nahezu sämtliche Feldlinien verlaufen daher in der Rohrwand.

Fig. 2 zeigt eine erfindungsgemäße Luftspule in einer Ansicht vom hinteren Ende des Rohres aus gesehen. Die Leiterabschnitte 2 und 3, 4 und 5, 6 und 7 sowie 8 und 9 sind jeweils durch Verbindungsstücke 13, 14, 15 bzw. 16 miteinander verbunden. Diese Verbindungsstücke liegen parallel zueinander, so daß das in diesem Bereich erzeugte Magnetfeld gegenüber dem im seitlichen Bereich in der Spule erzeugte Magnetfeld um 90° gedreht ist. Während im Längsbereich der Spule Längsfehler der Rohroberfläche ermittelt werden können, dient das um 90° gedrehte Magnetfeld des Endbereicht dazu, Querfehler auf der Rohrinnenwand während des Ein -und Ausfahrens der Spule festzustellen. Um den gesamten inneren Endbereich des Rohres auf Fehler zu überprüfen, wird das Rohr relativ zur Spule während des Einführens bzw. des Herausfahrens der Spule in bzw. aus dem Rohr gedreht, so daß in allen zu prüfenden Wandbereichen verschiedene Magnetisierungsrichtungen auftreten, durch die quasi gleichzeitig sowohl Längs- als auch Querfehler erfaßt werden können.

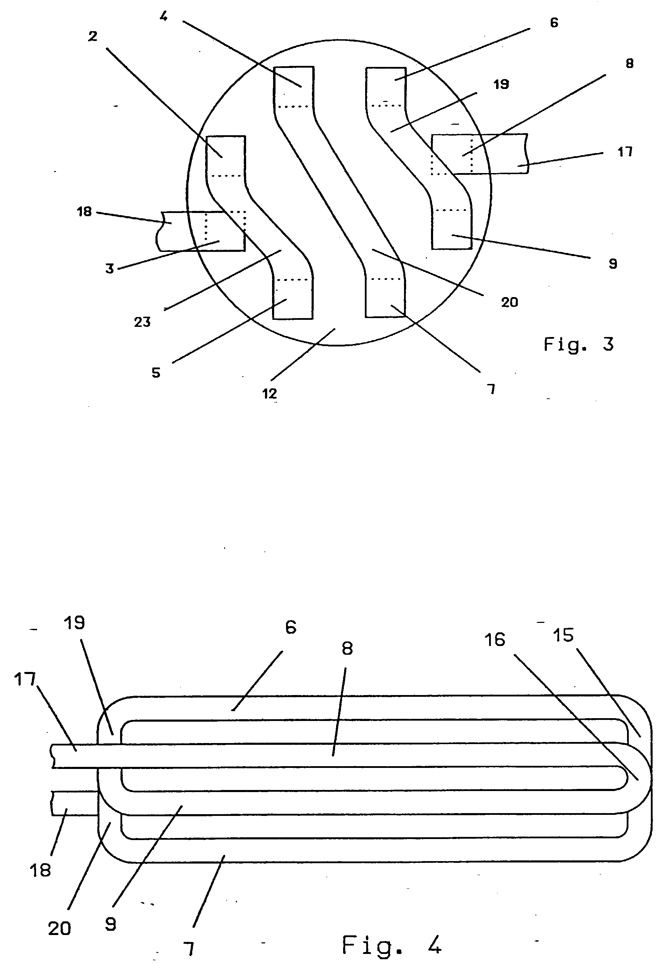

Fig. 3 zeigt eine Vorderansicht der erfindungsgemäßen Luftspule. Über die Anschlüsse 17 und 18 wird der Spule der benötigte Strom zugeführt. Die vordere Verbindung der Spulenabschnitte erfolgt über Schrägverbindungen 19, 20, 23.

Fig. 4 zeigt eine Ausführungsform einer Spule in Seitenansicht. Der Anschluß 17 führt auf den Spulenlängsleiter 8, der über die Endverbindung 16 in den unteren Leiterabschnitt 9 führt. Das andere Ende der Spule ist durch den Anschluß 18 gebildet.

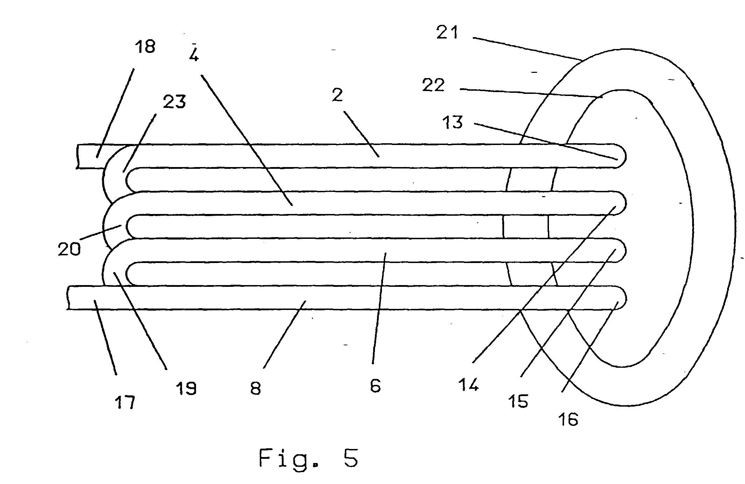

Fig. 5 zeigt die Spule von Fig. 4 in einer Ansicht um 90° gedreht. Es ist gezeigt, daß die rückwärtigen Verbindungen der Spule parallel zueinander verlaufen, während die vorderen Verbindungen der Einzelleiterabschnitte durch Schrägverbindungen gebildet sind. Fig. 5 zeigt auch Feldlinien 21 und 22, die durch die hinteren Verbindungen der Spule erzeugt sind und zur Feststellung von Querfehlern auf der Oberfläche des zu prüfenden Rohres dienen.

Zur erleichterten Handhabung der Spule wird diese vorzugsweise in Kunststoff eingegossen.

Zur Durchführung des Verfahrens wird die erfindungsgemäße Einrichtung nach Stromeinschaltung langsam in das zu prüfende Rohr eingeführt, wobei gleichzeitig Magnetpulver, das in einer Suspension aufgeschwemmt ist, in das Rohr eingelassen wird. Damit die Flüssigkeit in das Innere des Rohres einlaufen kann, ist das Rohr um einige Grad schräg nach hinten abfallend angeordnet. Durch die Drehung des Rohres erfolgt eine allseitige Benetzung der Innenoberfläche des Rohres über den gewünschten wünschten Tiefenbereich. Nachdem die Spule bis zur Tiefe in das Rohr eingeführt wurde, wird sie wieder herausgezogen. Durch die aufgebrauchte Magnetisierung haben sich die magnetisierbaren Teilchen des Magnetpulvers an Fehlstellen der Oberfläche des Rohres ausgerichtet und können nun entweder unmittelbar betrachtet oder über Spiegeleinrichtungen, wie beispielsweise Endoskope oder andere optische Einrichtungen erfaßt werden.

Die Spule besteht vorzugsweise aus 3 bis 5 Windungen und ist in ihrem äußeren Durchmesser an den Durchmesser eines zu prüfenden Rohres angepaßt. Um auch Rohre mit etwas größerem Durchmesser mit der gleichen Spuleneinrichtung erfassen zu können, kann vorgesehen sein, daß die Spule aus einzelnen Sigmenten zusammengesetzt ist, so daß durch Anflanschen oder Dazwischenflanschen von zusätzlichen Spulenabschnitten eine Durchmesseränderung ermöglicht ist.

Die durch die Leiterabschnitte 2 und 3, 4 und 5, 6 und 7 und 8 und 9 gebildeten Windungen weisen eine angenommene Ebene auf, die parallel zur Längsachse des Prüflings angeordnet wird. Damit können die aus den seitlichen Windungen, die aus den Leiterabschnitten 2 und 3 bzw. 8 und 9 gebildet sind Windungen austretenden Feldlinien unmittelbar im rechten Winkel in die daran sich unmittelbar anschließende Rohrinnenwand eintreten. Hierdurch ergibt sich in diesem Bereich eine hohe Feldstärke, die ein hochempfindliches Erfassen von Längsfehlern auf der Oberfläche des Rohres ermöglicht.

### Bezugszeichenliste

- 1: Rohr
- 2 - 9: Leiterabschnitte
- 10: Feldlinie
- 11: Feldlinie
- 12: Kunststoff
- 13 - 16: rückwärtige Verbindungen
- 17: Anschluß
- 18: Anschluß
- 19: vorderseitige Verbindung
- 20: vorderseitige Verbindung
- 21: Feldlinie
- 22: Feldlinie
- 23: vorderseitige Verbindung

## Patentansprüche

1. Verfahren zur berührungslosen Magnetpulverprüfung der inneren Endbereiche von ferromagnetischen hohlzylindrischen Werkstücken (1), insbesondere Rohren, bei dem ein mit Hilfe einer Spule im Inneren des Werkstücks aufgebautes Magnetfeld der Ermittlung von Fehlstellen des Werkstücks durch Feststellung der resultierenden Ausrichtung von auf die Oberfläche des Werkstücks aufgebrachtem ferromagnetischem Pulver dient, dadurch gekennzeichnet, daß eine aus Quer- und Längsleiterabschnitten gebildete in Richtung der Längsleiterabschnitte gestreckte Luftspule in das Werkstück eingefahren wird, wobei die Längsleiterabschnitte (2 - 9) parallel zur Werkstücklängsachse verlaufen, und die Spule anschließend aus dem Werkstück unter relativer Drehung von Werkstück und Spule zueinander herausgefahren wird, wobei die die Spule durchflutenden Feldlinien sich über die Werkstückwand schließen und im Bereich des Feldlinienein- und -austritts in Abhängigkeit vom Vorhandensein von Fehlern eine Ausrichtung des auf die Innenoberfläche des Werkstücks aufgetragenen Magnetpulvers bewirken.

2. Verfahren nach Anspruch 1, dadurch gekennzeichnet, daß das Magnetpulver in einer Flüssigkeit suspendiert ist, und daß das Werkstück während des Auftrags des Magnetpulvers unter einem geringen Neigungswinkel zur Horizontalen ausgerichtet ist, um während der Drehung des Werkstücks eine fortschreitende Benetzung der Innenoberfläche des Werkstücks mit Magnetpulver zu bewirken.

3. Verfahren nach Anspruch 1, dadurch gekennzeichnet, daß im Bereich des Feldlinienaus- oder -eintritts der Spule ein optisches Erfassungsystem zur Feststellung der auf der Innenoberfläche des Werkstücks ermittelten Fehler-Art, -Größe und -Ort vorgesehen ist.

4. Einrichtung zur Durchführung des Verfahrens nach Anspruch 1, dadurch gekennzeichnet, daß eine aus parallelen Windungen bestehende, mindestens drei Windungen aufweisende, aus Quer- und Längsleiterabschnitten gebildete und in Richtung der Längsleiterabschnitte (2- 9) gestreckte Luftspule vorgesehen ist, deren jeweilige Einzelwindungen im wesentlichen rechteckförmig ausgebildet sind und deren Längsleiterabschnitte parallel zur Achse eines Werkstücks ausgerichtet werden können, und daß die Länge der Querleiterabschnitte (13 - 16,19, 20, 23) jeder Windung sowie der Abstand der Windungsebenen derart gewählt ist, daß die Spule in einer Ebene rechtwinklig zu den Längsleiterabschnitten (2 - 9) im wesentlichen einen kreisförmigen Umfang aufweist, wobei die jeweilige Windungsgröße der Spule einer Längsschnittebene eines Werkstücks angepaßt ist, so daß die Einzelwindungen im in das Werkstück eingefahrenen Zustand der Spule nahe der Innenoberfläche des Werkstücks verlaufen können.

5. Einrichtung nach Anspruch 4, dadurch gekennzeichnet, daß die Windungen der Spule durch Kunststoff vergossen sind.

6. Einrichtung nach Anspruch 5, dadurch gekennzeichnet, daß weitere Windungen an die Spule anflanschbar sind, wobei jede weitere Windung elektrisch in Reihe mit den übrigen Windungen der Spule geschaltet ist.

7. Einrichtung nach einem oder mehreren der Ansprüche 4 - 6, dadurch gekennzeichnet, daß die Spule aus 3 - 5 Windungen besteht.

8. Einrichtung nach Anspruch 7, dadurch gekennzeichnet, daß die aus 3 - 5 Windungen bestehende Spule während der Prüfung von einem Strom mit 1000 - 1500 A durchflossen werden kann.

## Claims

1. Method for the contactless magnetic powder inspection of the inner end regions of ferromagnetic hollow cylinder workpieces (1), particularly pipes, in which a magnetic field made with the use of a coil in the interior of the workpiece is used to detect defects in the workpiece by ascertainment of the resultant orientation of ferromagnetic powder applied to the surface of the workpiece, characterized in that an air-core coil formed from transverse and longitudinal conductor sections and extending in the direction of the longitudinal conductor sections is brought into the workpiece, the longitudinal conductor sections (2 - 9) running parallel to the longitudinal axis of the workpiece, and the coil is then brought out of the workpiece, while the workpiece and the coil are rotated relative to one another, the field lines flowing through the coil closing over the wall of the workpiece and, in dependence on the existence of faults, effecting an orientation, in the region of the field line entry and exit, of the magnetic powder applied to the inner surface of the workpiece.

2. Method according to Claim 1, characterized in that the magnetic powder is suspended in a fluid and that, during the application of the magnetic powder, the workpiece is aligned at a small angle of inclination relative to the horizontal for the purpose of effecting a progressive wetting of the inner surface of the workpiece with magnetic powder while the workpiece is rotated.

3. Method according to Claim 1, characterized in that in the region of the field line exit or entry of the coil there is provided an optical sensing system for the ascertainment of the nature, size and location of faults detected on the inner surface of the workpiece.

4. Device for the execution of the method according to Claim 1, characterized in that there is provided an air-core coil, which consists of parallel windings, comprises at least three windings, is formed from transverse and longitudinal conductor sections and extends in the direction of the longitudinal conductor sections (2 - 9), each of the individual windings of the said air-core coil being essentially rectangular in form and its longitudinal conductor sections being capable of being aligned parallel to the axis of a workpiece, and that the length of the transverse conductor sections (13 - 16, 19, 20, 23) of each winding and the spacing of the winding planes is selected so that the coil has essentially a circular circumference in a plane at right angles to the longitudinal conductor sections (2 - 9), the size of each winding of the coil being matched to a longitudinal section plane of a workpiece so that when the coil is brought into the workpiece the individual windings can run close to the inner surface of the workpiece.

5. Device according to Claim 4, characterized in that the windings of the coil are encapsulated in plastics.

6. Device according to Claim 5, characterized in that further windings can be flange-mounted on to the coil, each further winding being electrically connected in series with the other windings of the coil.

7. Device according to one or more of Claims 4 - 6, characterized in that the coil consists of 3 - 5 windings.

8. Device according to Claim 7, characterized in that a current of 1000 - 1500 A can be passed through the coil consisting of 3 - 5 windings during the inspection.

## Revendications

1. Procédé pour contrôler par poudre magnétique, sans contact, les zones d'extrémité intérieures de pièces cylindriques creuses ferromagnétiques (1), en particulier de tubes, selon lequel un champ magnétique formé à l'aide d'une bobine à l'intérieur de la pièce sert à rechercher les défauts de la pièce grâce à la constatation de l'orientation résultante de la poudre ferromagnétique appliquée sur la surface de la pièce, caractérisé en ce qu'on introduit dans la pièce une bobine à air formée de sections conductrices transversales et longitudinales et allongée dans le sens des sections conductrices longitudinales, étant précisé que les sections conductrices longitudinales (2-9) sont parallèles à l'axe longitudinal de la pièce, puis on sort la bobine de la pièce moyennant une rotation relative de la pièce et de la bobine, étant précisé que les lignes de champ qui traversent la bobine se ferment sur la paroi de la pièce et provoquent dans la zone de l'entrée et de la sortie des lignes de champ, en fonction de la présence de défauts, une orientation de la poudre magnétique appliquée sur la surface intérieure de la pièce.

2. Procédé selon la revendication 1, caractérisé en ce que la poudre magnétique est en suspension dans un liquide et en ce que, pendant l'application de la poudre magnétique, la pièce est orientée suivant un faible angle d'inclinaison par rapport à l'horizontale afin de provoquer pendant la rotation de la pièce une imprégnation progressive de la surface intérieure de la pièce avec la poudre magnétique.

3. Procédé selon la revendication 1, caractérisé en ce qu'on prévoit dans la zone de la sortie ou de l'entrée des lignes de champ de la bobine un système d'enregistrement optique destiné à constater le type, la taille et l'emplacement des défauts détectés sur la surface intérieure de la pièce.

4. Dispositif pour la mise en oeuvre du procédé selon la revendication 1, caractérisé en ce qu'il est prévu une bobine à air formée de spires parallèles, qui comporte au moins trois spires, qui est formée de sections transversales et longitudinales et qui est allongée dans le sens des sections conductrices longitudinales (2-9), dont les spires individuelles ont une forme globalement rectangulaire et dont les sections conductrices longitudinales peuvent être orientées parallèlement à l'axe d'une pièce, et en ce que la longueur des sections conductrices transversales (13-16, 19, 20, 23) de chaque spire et l'écartement des plans de spires sont choisis pour que la bobine présente globalement, dans un plan à angle droit avec les sections conductrices longitudinales (2-9), une circonférence circulaire, étant précisé que la taille de spires de la bobine est adaptée à un plan longitudinal d'une pièce, de sorte que lorsque la bobine est entrée dans la pièce, les spires individuelles peuvent se trouver près de la surface intérieure de la pièce.

5. Dispositif selon la revendication 4, caractérisé en ce que les spires de la bobine sont scellées par une matière plastique.

6. Dispositif selon la revendication 5, caractérisé en ce que des spires supplémentaires peuvent être fixées par bride à la bobine, chaque spire supplémentaire étant montée électriquement en série avec les autres spires de la bobine.

7. Dispositif selon l'une au moins des revendications 4 à 6, caractérisé en ce que la bobine se compose de 3 à 5 spires.

8. Dispositif selon la revendication 7, caractérisé en ce que la bobine composée de 3 à 5 spires peut être traversée pendant le contrôle par un courant de 1000 à 1500 A.
